# EUROPEAN PATENT APPLICATION

(11) **EP 2 963 529 A1**
(43) Date of publication of application: **06.01.2016**
(21) Application number: 14757074.1
(22) Date of filing: 20.01.2014
(51) Int. Cl.: G06F 3/046, G06F 3/041

(54) **MAGNETIC CIRCUIT BOARD, METHOD FOR MANUFACTURING SAME, AND POSITION DETECTION DEVICE**

(30) Priority: 26.02.2013 JP 2013035701
(71) Applicant: Nitto Denko Corporation, Ibaraki-shi, Osaka 567-8680 (JP)
(72) Inventor: EBE, Hirofumi, Ibaraki-shi Osaka 567-8680 (JP); HABU, Takashi, Ibaraki-shi Osaka 567-8680 (JP)
(74) Representative: Hoffmann Eitle
(86) International application number: PCT/JP2014/050994
(87) International publication number: WO 2014/132700

(57) **Abstract**

A magnetic circuit board includes a circuit board portion and a magnetic layer directly laminated on one side of the circuit board portion and formed from a magnetic composition containing magnetic particles and resin.

## Description

### TECHNICAL FIELD

The present invention relates to a magnetic circuit board, a producing method thereof, and a position detection device.

### BACKGROUND ART

A position detection device having a pen-type position indicator for detecting a position by moving the pen on a position detection plane is called a digitizer, and is widely spread as an input device for computers. The position detection device includes a position detection flat plate, and a circuit board (sensor board) disposed therebelow and having loop coils formed on the surface of the board. Then, the position of the position indicator is detected by using electromagnetic induction generated by the position indicator and loop coils.

Patent Document 1 has proposed, for example, a method in which a shield plate made of silicon copper is attached to a face (opposite face) opposite to the face of the position detection plane of the sensor board in a position detection device via an adhesive tape for efficient communication by controlling the magnetic flux generated at the time of electromagnetic induction.

### Citation List

### Patent Document

Patent Document 1: Japanese Unexamined Patent Publication No. 1993-158606

### SUMMARY OF THE INVENTION

### PROBLEM TO BE SOLVED BY THE INVENTION

There is a demand for a thinner size of a magnetic circuit board including a position detection device. However, in the position detection device proposed in Patent Document 1, there is a disadvantage that the adhesive tape is provided between a sensor board and a shield plate, so that the above-described demand cannot be satisfied.

An object of the present invention is to provide a magnetic circuit board capable of achieving a thinner size, a producing method thereof, and a position detection device.

### MEANS FOR SOLVING THE PROBLEM

A magnetic circuit board of the present invention includes a circuit board portion and a magnetic layer directly laminated on one side of the circuit board portion and formed from a magnetic composition containing magnetic particles and resin.

In the magnetic circuit board, by the magnetic layer, the magnetic flux generated in the circuit board portion is converged in the magnetic layer, thereby efficiently performing the communication between the indicator and the loop coils. Simultaneously, in the magnetic circuit board, the magnetic layer is directly laminated on one side of the circuit board portion, thereby achieving a thinner size.

It is preferable that in the magnetic circuit board of the present invention, the circuit board portion is a both-side conductive pattern board having a resin board and conductive patterns laminated on both sides of the resin board, and the magnetic layer is directly laminated on one side of the both-side conductive pattern board so as to directly cover the one conductive pattern.

In the magnetic circuit board, the conductive patterns are laminated on both sides of the resin board, so that a degree of freedom in design of the conductive pattern can be improved.

It is preferable that in the magnetic circuit board of the present invention, the conductive pattern includes a plurality of wires disposed with spaced gaps to each other and a part of the magnetic layer is embedded in the gap.

In the magnetic circuit board, a part of the magnetic layer is embedded in the gap between the wires, so that adhesive properties of the magnetic layer to the circuit board portion can be improved.

It is preferable that in the magnetic circuit board of the present invention, the circuit board portion has a both-side conductive pattern board including a resin board and conductive patterns laminated on both sides of the resin board and a resin layer laminated on the both-side conductive pattern board, and the magnetic layer is directly laminated on the resin layer.

In the magnetic circuit board, the both-side conductive pattern board is protected by the resin layer and a thinner size thereof can be achieved.

It is preferable that in the magnetic circuit board of the present invention, the magnetic layer is in a semi-cured state.

In the magnetic circuit board, when the magnetic layer in a semi-cured state is attached to an adherend and thereafter, the magnetic layer is cured, adhesive force of the magnetic layer to the circuit board portion can be improved.

It is preferable that in the magnetic circuit board of the present invention, a metal layer is further laminated on a face opposite to the face having the both-side conductive pattern board laminated thereon in the magnetic layer.

In the magnetic circuit board, by the metal layer, the magnetic flux slightly leaked out of the magnetic layer can disappear, thereby improving accuracy of position detection.

A position detection device of the present invention includes the above-described magnetic circuit board.

The position detection device can achieve a thinner size.

A method for producing a magnetic circuit board of the present invention includes a step of attaching a magnetic layer in a semi-cured state formed from a magnetic composition containing magnetic particles and resin to one side of a circuit board portion.

The method for producing a magnetic circuit board includes the step of attaching the magnetic layer in a semi-cured state formed from the magnetic composition containing the magnetic particles and the resin to one side of the circuit board portion, so that adhesive properties of the magnetic layer to the circuit board portion can be improved.

It is preferable that in the method for producing a magnetic circuit board of the present invention, the magnetic layer has a tensile storage elastic modulus E' at 150°C of 1.0 × 10⁹ Pa or less.

It is preferable that in the method for producing a magnetic circuit board of the present invention, a curing step of completely curing the magnetic layer in a semi-cured state is further included after the step of attaching the magnetic layer to the circuit board portion.

In the method for producing a magnetic circuit board, the curing step of completely curing the magnetic layer in a semi-cured state is further included after the step of attaching the magnetic layer to the circuit board portion, so that adhesion to the circuit board portion and reliability of magnetic properties are improved, and heat resistance can be imparted.

It is preferable that in the method for producing a magnetic circuit board of the present invention, the magnetic layer completely cured in the curing step has a tensile storage elastic modulus E' at 23°C of above 1.0 × 10⁹ Pa.

The magnetic circuit board obtained by the producing method has excellent reliability of the magnetic layer.

It is preferable that in the method for producing a magnetic circuit board of the present invention, the circuit board portion includes a resin board and conductive patterns laminated on both sides of the resin board; the conductive pattern includes a plurality of wires disposed with spaced gaps to each other; and in the step of attaching the magnetic layer to the circuit board portion, a part of the magnetic layer is embedded in the gap.

In the method for producing a magnetic circuit board, in the step of attaching the magnetic layer to the circuit board portion, a part of the magnetic layer is embedded in the gap, so that adhesive properties of the magnetic layer to the circuit board portion can be improved.

### EFFECT OF THE INVENTION

The magnetic circuit board of the present invention and the position detection device of the present invention including the magnetic circuit board of the present invention achieve a thinner size.

Also, according to the method for producing a magnetic circuit board of the present invention, adhesive properties of the magnetic layer to the circuit board portion can be improved.

### BRIEF DESCRIPTION OF THE DRAWINGS

[FIG. 1] FIG. 1 shows a sectional view of one embodiment of a magnetic circuit board of the present invention.
[FIG. 2] FIG. 2 shows a sectional view of another embodiment of a magnetic circuit board of the present invention.

### DESCRIPTION OF EMBODIMENTS

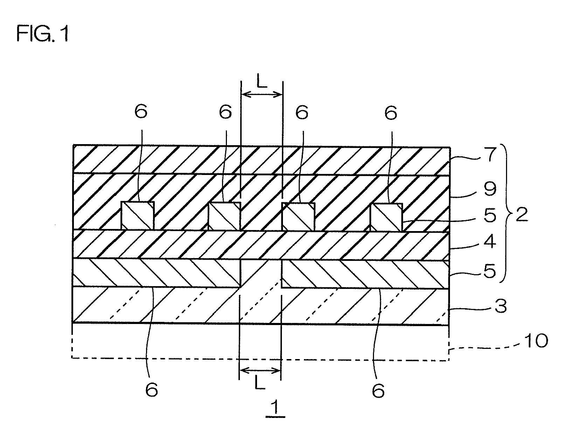

In FIG. 1, a magnetic circuit board 1 includes, as a circuit board portion, a both-side conductive pattern board 2 and, as a magnetic layer, a magnetic film 3 that is directly laminated on the lower face (one side) of the magnetic circuit board 1.

The magnetic circuit board 1 includes, as a resin board, a base resin board 4 and conductive patterns 5 that are laminated on each of the upper face and the lower face of the base resin board 4. The magnetic circuit board 1 includes a first cover resin layer 7 that covers the upper-side conductive pattern 5.

The base resin board 4 forms the outer shape of the magnetic circuit board 1 and is, for example, formed of a resin film. Examples of the resin film include a polyimide film, a polyester film, a polyethylene terephthalate film, a polyethylene naphthalate film, and a polycarbonate film. The base resin board 4 has a thickness of, for example, 6 µm or more, preferably 12 µm or more, and for example, 50 µm or less, preferably 35 µm or less.

The conductive pattern 5 is formed into a pattern including a plurality of wires 6 disposed with spaced gaps L to each other. Examples of the conductive pattern 5 include a loop coil shape and a mesh shape. The conductive pattern 5 is, for example, formed from a conductive material such as copper, nickel, gold, and solder or an alloy thereof. The conductive pattern 5 has a thickness of, for example, 6 µm or more, preferably 9 µm or more, and for example, 50 µm or less, preferably 35 µm or less. The gap L between the wires 6 is a space (pitch) between the wires 6 and is, for example, 50 µm or more, preferably 80 µm or more, and for example, 3 mm or less, preferably 2 mm or less. The wire 6 has a width of, for example, 6 µm or more, preferably 9 µm or more, and for example, 100 µm or less, preferably 75 µm or less.

The first cover resin layer 7 is formed over the base resin board 4 so as to cover the upper-side wires 6. The first cover resin layer 7 is formed of the same resin film as that of the base resin board 4. The first cover resin layer 7 has a thickness of, for example, 6 µm or more, preferably 9 µm or more, and for example, 25 µm or less, preferably 20 µm or less.

The first cover resin layer 7 covers the wires 6 and the base resin board 4 via an adhesive layer 9 prepared from a known adhesive. The adhesive layer 9 has a thickness, to be specific, a distance (maximum thickness of the adhesive layer 9) between the upper face of the base resin board 4 and the upper face of a second cover resin layer 8 of, for example, 20 µm or more, preferably 35 µm or more, and for example, 70 µm or less, preferably 50 µm or less.

The magnetic film 3 is formed below the base resin board 4 so as to cover the lower-side conductive pattern 5. To be more specific, the magnetic film 3 is formed so as to cover the lower face of the base resin board 4 exposed from the lower-side wires 6 and to cover the lower and side faces of the wires 6. A part of the base resin board 4 is embedded in the gap L between the wires 6.

The magnetic film 3 is formed from a magnetic composition containing magnetic particles and resin.

Examples of the magnetic material that forms the magnetic particles include ferromagnetic materials and diamagnetic materials. Preferably, ferromagnetic materials are used.

The ferromagnetic material is a magnetic material that is strongly magnetized by the magnetic field in a direction thereof and leaves residual magnetization after removing the magnetic field. Examples of the ferromagnetic material include soft magnetic materials and hard magnetic materials. Preferably, soft magnetic materials are used.

Examples of the soft magnetic materials include magnetic stainless steel (Fe-Cr-Al-Si alloy), Sendust (Fe-Si-Al alloy), permalloy (Fe-Ni alloy), silicon copper (Fe-Cu-Si alloy), Fe-Si alloy, Fe-Si-B (-Cu-Nb) alloy, Fe-Si-Cr-Ni alloy, Fe-Si-Cr alloy, Fe-Si-Al-Ni-Cr alloy, and ferrite. Among these, in view of magnetic properties, preferably, Sendust (Fe-Si-Al alloy) is used.

To be specific, a Fe-Si-Al alloy having a Si content of 9 to 15 mass% is used. In this manner, a real part (µ') of sheet magnetic permeability can be increased.

The magnetic particles are, for example, shaped flat (plate). The aspect ratio is, for example, 8 or more, preferably 15 or more, and for example, 80 or less, preferably 65 or less. The aspect ratio is calculated as an aspect ratio dividing the 50% particle size (D50) by a thickness of the magnetic particles.

The magnetic particles have an average particle size (average length) of, for example, 3.5 µm or more, preferably 10 µm or more, and for example, 100 µm or less. The average thickness is, for example, 0.3 µm or more, preferably 0.5 µm or more, and for example, 3 µm or less, preferably 2.5 µm or less. By adjusting the aspect ratio, average particle size, and average thickness of the magnetic particles, demagnetization effects of the magnetic particles can be reduced, and as a result, magnetic permeability of the magnetic particles can be increased. To equalize the size of the magnetic particles, as necessary, those magnetic particles classified with, for example, a sieve can be used.

The surfaces of the magnetic particles may be subjected to, for example, a coupling treatment with a coupling agent. Use of the magnetic particles subjected to the coupling treatment reinforces the interface between the magnetic particles and the resin component, and therefore the magnetic film 3 can be filled with the magnetic particles at a high ratio.

Examples of the coupling agent include silane coupling agents such as γ-methacryloxy propyltrimethoxysilane, γ-glycidoxypropyltrimethoxysilane, and γ-glycidoxypropylmethyldiethoxysilane.

When the magnetic film 3 contains the magnetic particles subjected to the coupling treatment, the magnetic particles subjected to a silane coupling treatment in advance can be used as a material, or the magnetic composition and the coupling agent can be mixed for the coupling treatment when producing the magnetic film 3.

The magnetic particles content in the magnetic composition is, for example, 80 mass% or more, preferably 85 mass% or more, and for example, 95 mass% or less, preferably 92 mass% or less. By setting the magnetic particles content in the range of the above-described upper limit or less, excellent forming properties of the magnetic film 3 can be achieved (that is, film-forming of the magnetic composition into the magnetic film 3 can be achieved). Meanwhile, by setting the magnetic particles content in the range of above-described lower limit or more, the magnetic film 3 having excellent magnetic properties can be achieved.

Examples of the resin include thermoplastic resins such as polyolefin (e.g., polyethylene, polypropylene, ethylene-propylene copolymer, etc.), acrylic resin, polyvinyl acetate, an ethylene-vinyl acetate copolymer, polyvinyl chloride, polystyrene, polyacrylonitrile, polyamide (Nylon (registered trademark)), polycarbonate, polyacetal, polyethylene terephthalate, polyphenylene oxide, polyphenylene sulfide, polysulfone, polyether sulfone, polyether ether ketone, polyallyl sulfone, thermoplastic polyimide, thermoplastic urethane resin, polyaminobismaleimide, polyamideimide, polyetherimide, bismaleimide triazine resin, polymethyl pentene, fluorine resin, a liquid crystal polymer, an olefin-vinyl alcohol copolymer, ionomer, polyarylate, an acrylonitrile-ethylene-styrene copolymer, an acrylonitrile-butadiene-styrene copolymer, and an acrylonitrile-styrene copolymer. Examples of the resin also include epoxy resin, thermosetting polyimide, phenol resin, urea resin, melamine resin, unsaturated polyester resin, diallylphthalate resin, silicone resin, and thermosetting urethane resin.

A preferable example of the resin includes a resin component composed of acrylic resin, epoxy resin, and phenol resin.

An example of the acrylic resin includes an acrylic-type polymer produced by polymerizing a monomer component of one, or two or more of straight chain or branched alkyl (meth)acrylate ester having an alkyl group. "(Meth)acrylic" represents "acrylic and/or methacrylic".

An example of the alkyl group includes an alkyl group having 1 to 20 carbon atoms such as a methyl group, an ethyl group, a propyl group, an isopropyl group, a n-butyl group, a t-butyl group, an isobutyl group, an amyl group, an isoamyl group, a hexyl group, a heptyl group, a cyclohexyl group, a 2-ethylhexyl group, an octyl group, an isooctyl group, a nonyl group, an isononyl group, a decyl group, an isodecyl group, an undecyl group, a lauryl group, a tridecyl group, a tetradecyl group, a stearyl group, an octadecyl group, and a dodecyl group. Preferably, an alkyl group having 1 to 6 carbon atoms is used.

The acrylic-type polymer can be a copolymer of the alkyl (meth)acrylate ester and an additional monomer.

Examples of another monomer include glycidyl group-containing monomers such as glycidylacrylate and glycidylmethacrylate; carboxyl group-containing monomers such as acrylic acid, methacrylic acid, carboxyethyl acrylate, carboxypentyl acrylate, itaconic acid, maleic acid, fumaric acid, and crotonic acid; acid anhydride monomers such as maleic anhydride and itaconic anhydride; hydroxyl group-containing monomers such as 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, and (4-hydroxymethylcyclohexyl)-methylacrylate; sulfonic acid group-containing monomers such as styrenesulfonic acid, allylsulfonic acid, 2-(meth) acrylamide-2-methylpropane sulfonic acid, (meth)acrylamidepropane sulfonic acid, sulfopropyl (meth)acrylate, and (meth)acryloyloxynaphthalenesulfonic acid; phosphoric acid group-containing monomers such as 2-hydroxyethylacryloyl phosphate; styrene monomer; and acrylonitrile.

Among these, preferably, a glycidyl group-containing monomer, carboxyl group-containing monomer, or hydroxyl group-containing monomer is used. When the acrylic resin is a copolymer of alkyl (meth)acrylate ester and an additional monomer of these, that is, when the acrylic resin has a glycidyl group, a carboxyl group, or a hydroxyl group, reflow resistance of the magnetic film 3 that is cured by heating is more excellent.

The mixing ratio of another monomer (mass) is, when a copolymer of the alkyl (meth)acrylate ester and another monomer is used, preferably, for example, 40 weight% or less.

The acrylic resin has a weight-average molecular weight of, for example, 1 × 10⁵ or more, preferably 3 × 10⁵ or more, and for example, 1 × 10⁶ or less. By setting the mixing ratio of another monomer (mass) in this range, the magnetic film 3 with excellent adhesiveness and reflow resistance can be achieved. The weight-average molecular weight is measured by gel permeation chromatography (GPC) based on a polystyrene standard calibration value.

The acrylic resin has a glass transition temperature (Tg) of, for example, -30°C or more, preferably -20°C or more, and for example, 30°C or less, preferably 15°C or less. When the glass transition temperature (Tg) is the above-described lower limit or more, adhesiveness of the magnetic film 3 is excellent. Meanwhile, when the glass transition temperature (Tg) is the above-described upper limit or less, handleability of the magnetic film 3 is excellent. The glass transition temperature is determined based on the maximum value of the loss tangent (tanδ) measured by using a dynamic viscoelasticity measuring apparatus (DMA, frequency of 1 Hz, temperature increase rate of 10°C/min).

The acrylic resin content relative to 100 parts by mass of the resin component (that is, component composed of acrylic resin, epoxy resin, and phenol resin and furthermore, another resin (described later) blended as necessary) is, for example, 10 parts by mass or more, preferably 20 parts by mass or more, more preferably 40 parts by mass or more, and for example, 80 parts by mass or less, preferably 70 parts by mass or less. By setting the acrylic resin content in the above-described range, the magnetic film 3 having excellent film-forming properties and adhesiveness can be achieved.

Examples of the epoxy resin include bifunctional epoxy resins and multifunctional epoxy resins such as bisphenol epoxy resin (particularly, bisphenol A epoxy resin, bisphenol F epoxy resin, bisphenol S epoxy resin, brominated bisphenol A epoxy resin, hydrogenated bisphenol A epoxy resin, bisphenol AF epoxy resin, etc.), phenol epoxy resin (particularly, phenol novolak epoxy resin, orthocresol novolak epoxy resin, etc.), biphenyl epoxy resin, naphthalene epoxy resin, fluorine epoxy resin, trishydroxyphenylmethane epoxy resin, and tetraphenylolethane epoxy resin. Furthermore, for example, hydantoin epoxy resin, trisglycidylisocyanurate epoxy resin, and glycidylamine epoxy resin are also used. These can be used singly, or can be used in combination of two or more.

Of these epoxy resins, preferably, bisphenol epoxy resin, novolak epoxy resin, orthocresol novolak epoxy resin, biphenyl epoxy resin, trishydroxyphenylmethane resin, and tetraphenylolethane epoxy resin are used, or more preferably, bisphenol epoxy resin is used. Containing such epoxy resins allows for excellent reactivity with phenol resin, and as a result, the magnetic film 3 has excellent reflow resistance.

Phenol resin is a curing agent for epoxy resin, and for example, novolak-type phenol resins such as phenol novolak resin, phenol aralkyl resin, cresol novolak resin, tert-butyl phenol novolak resin, and nonylphenol novolak resin; resol-type phenol resin; and polyoxystyrene such as polyparaoxystyrene are used. These can be used singly, or can be used in combination of two or more. Of these phenol resins, preferably, novolak-type resin is used, more preferably, phenol novolak resin and phenol aralkyl resin are used, or further more preferably, phenol aralkyl resin is used. Containing these phenol resins allows for improvement of connection reliability of the magnetic circuit board 1.

When the phenol equivalent of the phenol resin relative to 100 g/eq of the epoxy equivalent of the epoxy resin is 1 g/eq or more and less than 100 g/eq, the epoxy resin content relative to 100 parts by mass of the resin component is, for example, 15 parts by mass or more, preferably 35 parts by mass or more, and for example, 70 parts by mass or less; and the phenol resin content relative to 100 parts by mass of the resin component is, for example, 5 parts by mass or more, preferably 15 parts by mass or more, and for example, 30 parts by mass or less.

When the hydroxyl equivalent of the phenol resin relative to 100 g/eq of the epoxy equivalent of the epoxy resin is 100 g/eq or more and less than 200 g/eq, the epoxy resin content relative to 100 parts by mass of the resin component is, for example, 10 parts by mass or more, preferably 25 parts by mass or more, and for example, 50 parts by mass or less; and the phenol resin content relative to 100 parts by mass of the resin component is, for example, 10 parts by mass or more, preferably 25 parts by mass or more, and for example, 50 parts by mass or less.

When the phenol equivalent of the phenol resin relative to 100 g/eq of the epoxy equivalent of the epoxy resin is 200 g/eq or more and 1000 g/eq or less, the epoxy resin content relative to 100 parts by mass of the resin component is, for example, 5 parts by mass or more, preferably 15 parts by mass or more, and for example, 30 parts by mass or less; and the phenol resin content relative to 100 parts by mass of the resin component is, for example, 15 parts by mass or more, preferably 35 parts by mass or more, and for example, 70 parts by mass or less.

The epoxy equivalent when two types of epoxy resins are used in combination is an epoxy equivalent of all epoxy resins in total calculated by multiplying the epoxy equivalent of each epoxy resin by the mass ratio of each epoxy resin relative to the total amount of the epoxy resin, and adding up these.

The hydroxyl equivalent in the phenol resin per 1 equivalent of the epoxy group of the epoxy resin is, for example, 0.2 equivalent or more, preferably 0.5 equivalent or more, and for example, 2.0 equivalent or less, preferably 1.2 equivalent or less. When the amount of the hydroxyl group is in the above-described range, curing reaction of the magnetic film 3 is excellent, and deterioration can be suppressed.

The resin component content of the magnetic composition is, for example, 5 mass% or more, preferably 10 mass% or more, and for example, 20 mass% or less, preferably 15 mass% or less. By setting the resin component content in the range of the above-described upper limit or less, the magnetic film 3 having excellent film-forming properties can be achieved. Meanwhile, by setting the resin component content in the range of the above-described lower limit or more, the magnetic film 3 having excellent magnetic properties can be achieved.

Particularly, a total of the epoxy resin content and the phenol resin content relative to 100 parts by mass of the magnetic particles-excluding component, which is a composition excluding the magnetic particles from the magnetic composition, is, 20 parts by mass or more, preferably 30 parts by mass or more, more preferably 40 parts by mass or more, and for example, 99 parts by mass or less, preferably 90 parts by mass or less, more preferably 80 parts by mass or less, further more preferably 60 parts by mass or less.

When the total content is less than the above-described range, the acrylic resin content is large and the modulus of elasticity at the time of attachment is high, and therefore, embedment of the magnetic film 3 between the wires 6 of the both-side conductive pattern board 2 is inferior. Meanwhile, when the total content is more than the above-described range, the acrylic resin content is small, which reduces viscosity, and therefore, the magnetic particles quickly precipitate, which is disadvantageous in view of application properties.

The magnetic particles-excluding component is a component consisting of the resin component, the thermosetting catalyst, and the additive (described later) added as necessary, and to be more specific, does not include the magnetic particles and a solvent.

A thermosetting catalyst can be blended in the resin.

The thermosetting catalyst is a catalyst that accelerates curing of the epoxy resin and the phenol resin by heating, and examples thereof include a salt having an imidazole skeleton, a salt having a triphenylphosphine structure, a salt having a triphenylborane structure, and an amino group-containing compound.

Examples of the salt having an imidazole skeleton include 2-phenylimidazole (trade name; 2PZ), 2-ethyl-4-methylimidazole (trade name; 2E4MZ), 2-methylimidazole (trade name; 2MZ), 2-undecylimidazole (trade name; C11Z), 2-phenyl-4,5-dihydroxymethylimidazole (trade name; 2-PHZ), and 2,4-diamino-6-(2'-methylimidazolyl (1)') ethyl-s-triazine isocyanuric acid adduct (trade name; 2MAOK-PW) (the above-described products are all manufactured by Shikoku Chemicals Corporation).

Examples of the salt having a triphenylphosphine structure include triorganophosphine such as triphenylphosphine, tributyl phosphine, tri(p-methylphenyl) phosphine, tri(nonylphenyl) phosphine, and diphenyltolyl phosphine; tetraphenylphosphonium bromide (trade name; TPP-PB), methyltriphenylphosphonium (trade name; TPP-MB), methyltriphenylphosphonium chloride (trade name; TPP-MC), methoxymethyltriphenylphosphonium (trade name; TPP-MOC), benzyltriphenylphosphonium chloride (trade name; TPP-ZC), and methyltriphenylphosphonium (trade name; TPP-MB) (the above-described products are all manufactured by HOKKO CHEMICAL INDUSTRY CO., LTD.).

An example of the salt having a triphenylborane structure includes tri(p-methylphenyl) phosphine. The salt having a triphenyl borane structure further includes those having a triphenylphosphine structure. Examples of the salt having a triphenylphosphine structure and a triphenylborane structure include tetraphenylphosphonium tetraphenylborate (trade name; TPP-K), tetraphenylphosphonium tetra-p-triborate (trade name; TPP-MK), benzyltriphenylphosphonium tetraphenylborate (trade name; TPP-ZK), and triphenylphosphine triphenylborane (trade name; TPP-S) (the above-described products are all manufactured by HOKKO CHEMICAL INDUSTRY CO., LTD.).

Examples of the amino group-containing compound include monoethanolaminetrifluoroborate (manufactured by STELLACHEMIFA CORPORATION) and dicyandiamide (manufactured by NACALAI TESQUE, INC.)

The thermosetting catalyst has a shape of, for example, spherical or ellipsoidal.

These thermosetting catalysts can be used singly, or can be used in combination of two or more.

The mixing ratio of the thermosetting catalyst relative to 100 parts by mass of the resin component is, for example, 0.2 parts by mass or more, preferably 0.3 parts by mass or more, and for example, 1 part by mass or less, preferably 0.6 parts by mass or less. When the mixing ratio of the thermosetting catalyst is the above-described upper limit or less, storage stability for a long period of time at room temperature of the magnetic film 3 can be made excellent. Meanwhile, when the mixing ratio of the thermosetting catalyst is the lower limit or more, the magnetic film 3 can be cured by heating at low temperature and for a short period of time, and reflow resistance of the magnetic film 3 can be made excellent.

The magnetic composition may contain an additive as necessary. Examples of the additive include commercially available or known additives such as a cross-linking agent and an inorganic filler.

Examples of the cross-linking agent include polyisocyanate compounds such as tolylene diisocyanate, diphenylmethane diisocyanate, p-phenylenediisocyanate, 1,5-naphthalenediisocyanate, and an adduct of polyhydric alcohol and diisocyanate.

The cross-linking agent content relative to 100 parts by mass of the resin component is, for example, 0.05 parts by mass or more and 7 parts by mass or less. When the amount of the cross-linking agent is the above-described upper limit or less, excellent adhesive strength can be achieved. Meanwhile, when the amount of the cross-linking agent is the above-described lower limit or more, more excellent reflow resistance of the magnetic film 3 can be achieved.

Furthermore, an inorganic filler can be suitably blended in the magnetic composition in accordance with its use. Thermal conductivity and modulus of elasticity of the magnetic film 3 can be improved in this manner.

Examples of the inorganic filler include ceramics such as silica, clay, gypsum, calcium carbonate, barium sulfate, alumina, beryllium oxide, silicon carbide, and silicon nitride; metals or alloys of aluminum, copper, silver, gold, nickel, chromium, lead, tin, zinc, palladium, and solder; and also carbon. Of these examples of the inorganic filler, preferably, silica is used, or more preferably, molten silica is used.

The inorganic filler has an average particle size of, for example, 0.1 µm or more and 80 µm or less.

When the inorganic filler is blended, its mixing ratio relative to 100 parts by mass of the resin component is, for example, 80 parts by mass or less, preferably 70 parts by mass or less, and for example, more than 0 parts by mass.

These examples of the inorganic filler can be used singly, or can be used in combination of two or more.

The magnetic film 3 has a thickness (distance between the lower face of the base resin board 4 and the lower face of the magnetic film 3, maximum thickness of the magnetic film 3) of, for example, 5 µm or more, preferably 50 µm or more, and for example, 500 µm or less, preferably 250 µm or less.

Next, description is given below of a method for producing the magnetic circuit board 1.

In this method, first, the both-side conductive pattern board 2 is prepared.

To prepare the both-side conductive pattern board 2, each of the conductive patterns 5 is formed on both faces of the base resin board 4 by, for example, a semi-additive method or a subtractive method.

Next, the first cover resin layer 7 is laminated over the base resin board 4 via the adhesive layer 9 so as to cover the upper-side conductive pattern 5.

Also, the magnetic film 3 is directly laminated on the lower face of the both-side conductive pattern board 2.

To directly laminate the magnetic film 3 on the lower face of the both-side conductive pattern board 2, first, the magnetic film 3 is produced.

To produce the magnetic film 3, for example, first, a magnetic composition solution, in which the above-described magnetic composition is dissolved or dispersed in a solvent, is prepared.

Examples of the solvent include organic solvents such as ketones including acetone and methyl ethyl ketone (MEK); esters such as ethyl acetate; and amides such as N,N-dimethylformamide. Examples of the solvent also include water-based solvents such as water, and alcohols such as methanol, ethanol, propanol, and isopropanol.

The magnetic composition solution has a solid content of, for example, 10 mass% or more, preferably 30 mass% or more, and for example, 90 mass% or less, preferably 70 mass% or less.

Then, the magnetic composition solution is applied to a surface of a substrate (separator, core material, etc.) to give a predetermined thickness to form a coating, and then the coating is dried under predetermined conditions. The magnetic film 3 is produced in this manner.

The application method is not particularly limited, and for example, doctor blades, roll coating, screen coating, and gravure coating can be used.

Examples of drying conditions include a drying temperature of, for example, 70°C or more and 160°C or less, and drying time of, for example, 1 minute or more and 5 minutes or less.

The produced magnetic film 3 contains the magnetic particles relative to 100 parts by volume of the magnetic film 3 of, for example, 30 parts by volume or more, preferably 40 parts by volume or more, and for example, 70 parts by volume or less, preferably 65 parts by volume or less. Excellent magnetic properties can be achieved in this manner.

The magnetic film 3 is in a semi-cured state (B-stage state) under room temperature (to be specific, at 25°C).

The magnetic film 3 has a tensile storage elastic modulus E' at 150°C of, for example, 1.0 × 10⁹ Pa or less, preferably 2.0 × 10⁸ Pa or less, more preferably 1.0 × 10⁷ Pa or less, and for example, 1.0 × 10³ Pa or more.

The measurement conditions of the tensile storage elastic modulus E' are described in detail in Examples later.

When the tensile storage elastic modulus E' at 150°C of the magnetic film 3 is the above-described upper limit or less, embedment of the magnetic film 3 between the wires 6 can be improved.

The magnetic film 3 preferably contains flat magnetic particles, and the flat magnetic particles are arranged in 2-dimensional in-plane direction of the magnetic film 3. That is, the longitudinal direction (direction perpendicular to thickness direction) of the flat magnetic particles is oriented along the surface direction of the magnetic film 3. In this manner, the magnetic film 3 is filled with the magnetic particles at a high proportion, and excellent magnetic properties are achieved.

Examples of the separator include a polyethylene terephthalate (PET) film, a polyethylene film, a polypropylene film, and paper. The surfaces of these examples of the separator are subjected to release treatment with, for example, a fluorine release agent, a long-chain alkylacrylate release agent, and a silicone release agent.

Examples of the core material include a plastic film (e.g., polyimide film, polyester film, polyethylene terephthalate film, polyethylenenaphthalate film, polycarbonate film, etc.), a metal film (e.g., aluminum foil, etc.), and a resin substrate, a silicon substrate, and a glass substrate reinforced with, for example, glass fiber and plastic nonwoven fiber.

The separator or the core material has an average thickness of, for example, 1 µm or more and 500 µm or less.

Next, the produced magnetic film 3 is attached to the lower side of the both-side conductive pattern board 2 (attaching step).

To be specific, the magnetic film 3 on which a separator (not shown) is laminated and the base resin board 4 are disposed to face each other in spaced-apart relation in the thickness direction.

Subsequently, the magnetic film 3 is pressed against the wires 6. In this manner, the magnetic composition forming the magnetic film 3 flows and the wires 6 are embedded in the magnetic composition. That is, the lower face and the side faces of each of the wires 6 are covered with the magnetic composition. Together with the coverage of the lower face and the side faces of each of the wires 6, the lower face of the base resin board 4 exposed from the conductive pattern 5 is covered with the magnetic composition.

The pressure is, for example, 10 MPa or more, preferably 20 MPa or more, and for example, 100 MPa or less, preferably 50 MPa or less.

In this manner, the magnetic circuit board 1 including the magnetic film 3 in a B-stage state is produced.

The magnetic circuit board 1 has a thickness of, for example, 100 µm or more, preferably 130 µm or more, and for example, 200 µm or less, preferably 180 µm or less, more preferably 150 µm or less.

Thereafter, by completely curing the magnetic film 3 by heating the magnetic film 3 as necessary (curing step), the magnetic circuit board 1 including the magnetic film 3 in a C-stage state can be also produced.

The heating temperature is, for example, 80°C or more, preferably 100°C or more, and for example, 200°C or less, preferably 175°C or less, more preferably 140°C or less.

The heating time is, for example, 0.1 hours or more, preferably, 0.2 hours or more, and for example, 24 hours or less, preferably 3 hours or less, more preferably 2 hours or less.

The magnetic film 3 in a C-stage state has a tensile storage elastic modulus E' at 23°C of, for example, above 1.0 × 10⁹ Pa, preferably above 2.0 × 10⁹ Pa, more preferably 3.0 × 10⁹ Pa or more, and for example, 1.0 × 10¹² Pa or less.

The measurement conditions of the tensile storage elastic modulus E' at 23°C of the magnetic film 3 are described in detail in Examples later.

When the tensile storage elastic modulus E' at 23°C of the magnetic film 3 in a C-stage state is the above-described lower limit or more, reliability of the magnetic film 3 can be improved.

The magnetic circuit board 1 obtained in this manner is not particularly limited and can be used for, for example, a position detection device.

A position detection device includes, for example, a sensor board having the above-described magnetic circuit board 1 and a sensor portion mounted on the magnetic circuit board 1, and a position detection flat plate disposed above and to face the sensor board.

Examples of the reflowing process at the time of mounting the sensor portion on the magnetic circuit board 1 include, for example, hot air reflowing and infrared reflowing. The heating can be either entirely or partially.

The heating temperature in the reflowing process is, for example, 200°C or more, preferably 240°C or more, and for example, 300°C or less, preferably 265°C or less. The heating time is, for example, 1 second or more, preferably 5 seconds or more, more preferably 30 seconds or more, and for example, 2 minutes or less, preferably 90 seconds or less.

The position detection device is produced by disposing the position detection flat plate to face the above-described sensor board in spaced-apart relation.

In the above-described magnetic circuit board 1, by the magnetic film 3, the magnetic flux generated in the both-side conductive pattern board 2 is converged in the magnetic film 3, thereby efficiently performing the communication between the indicator and the loop coils (to be specific, the conductive pattern 5). Simultaneously, in the magnetic circuit board 1, the magnetic film 3 is directly laminated on the lower face of the both-side conductive pattern board 2, thereby achieving a thinner size.

In the magnetic circuit board 1, the conductive patterns 5 are laminated on both faces of the base resin board 4, so that a degree of freedom in design of the conductive pattern 5 can be improved.

In the magnetic circuit board 1, a part of the magnetic film 3 is embedded in the gap L between the wires 6, so that adhesive properties of the magnetic film 3 to the both-side conductive pattern board 2 can be improved.

In the magnetic circuit board 1, when the magnetic film 3 in a semi-cured state is attached to an adherend and thereafter, the magnetic film 3 is cured, adhesive force of the magnetic film 3 to the both-side conductive pattern board 2 can be improved.

The position detection device including the magnetic circuit board 1 can achieve a thinner size.

The method for producing the magnetic circuit board 1 includes the step of attaching the magnetic film 3 in a semi-cured state formed from the magnetic composition containing the magnetic particles and the resin to the lower face of the both-side conductive pattern board 2, so that adhesive properties of the magnetic film 3 to the both-side conductive pattern board 2 can be improved.

Furthermore, in the method for producing the magnetic circuit board 1, the curing step of completely curing the magnetic layer in a semi-cured state is further included after the step of attaching the magnetic film 3 to the both-side conductive pattern board 2, so that adhesion to the both-side conductive pattern board 2 and reliability of magnetic properties are improved, and heat resistance can be imparted.

In the method for producing the magnetic circuit board 1, in the step of attaching the magnetic film 3 to the both-side conductive pattern board 2, a part of the magnetic film 3 is embedded in the gap L, so that adhesive properties of the magnetic film 3 to the both-side conductive pattern board 2 can be improved.

In the above-described method, after the magnetic film 3 is pressed against the wires 6, the magnetic film 3 is heated. Alternatively, the heating can be also simultaneously performed with the pressing.

In the embodiment in FIG. 1, the both-side conductive pattern board 2 in which the conductive patterns 5 are formed on both faces of the base resin board 4 is used. Alternatively, for example, though not shown, a circuit board potion in which the conductive pattern 5 is formed on only one side can be also used.

As shown by phantom lines in FIG. 1, a metal layer 10 can be also laminated on the lower face of the magnetic film 3.

The metal layer 10 is laminated on a face (lower face) opposite to the face (upper face) on which the both-side conductive pattern board 2 is laminated in the magnetic film 3.

The metal layer 10 is, for example, formed from a metal material such as stainless steel, 42-alloy, aluminum, copper-beryllium, and phosphor bronze. The metal layer 10 has a thickness of, for example, 10 µm or more, preferably 30 µm or more, and for example, 100 µm or less, preferably 50 µm or less.

In the magnetic circuit board 1, by the metal layer 10, the magnetic flux slightly leaked out of the magnetic film 3 can disappear, thereby improving accuracy of position detection.

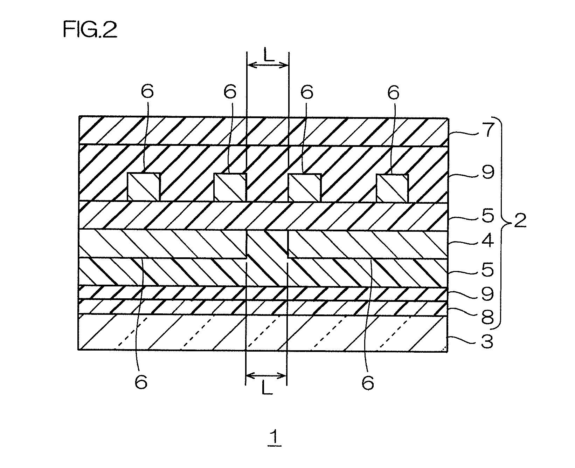

As shown in FIG. 2, the lower face of the both-side conductive pattern board 2 can be also formed from the second cover resin layer 8 as a resin layer.

The second cover resin layer 8 is provided between the both-side conductive pattern board 2 and the magnetic film 3 and is formed below the base resin board 4 via the adhesive layer 9 so as to cover the conductive pattern 5.

The second cover resin layer 8 is formed from the same resin film as that of the base resin board 4. The thickness of the second cover resin layer 8 is the same as that of the first cover resin layer 7.

The magnetic film 3 is directly laminated on the lower face of the second cover resin layer 8.

According to the magnetic circuit board 1 shown in FIG. 2, the both-side conductive pattern board 2 is protected by the second cover resin layer 8 and a thinner size thereof can be achieved.

### Examples

While in the following, the present invention is described in further detail with reference to Examples and Comparative Examples, the present invention is not limited to any of them by no means. The numeral values in Examples shown below can be replaced with the numeral values shown in the above-described embodiments (that is, the upper limit value or the lower limit value).

### Example 1

A both-side conductive pattern board 2 having a thickness of 48 µm (width of wire 6 of 100 µm, gap (pitch) between wires of 500 µm) in which loop coil conductive patterns 5 having a thickness of 15 µm were formed on both faces of a board 4 having a thickness of 18 µm was prepared.

Next, a first cover resin layer 7 composed of polyimide and having a thickness of 12 µm was attached onto the both-side conductive pattern board 2 via an adhesive layer 9 composed of epoxy/phenol.

Then, a magnetic film 3 was produced based on the formulation below.

That is, a magnetic composition was produced by mixing 500 parts by mass of magnetic particles (Fe-Si-Al alloy, soft magnetic particles, flat, manufactured by Mate Co., Ltd.), 72 parts by mass of an acrylate ester polymer mainly composed of ethyl acrylate-methyl methacrylate (manufactured by Negami Chemical Industirial Co., Ltd., trade name "Paracron W-197CM"), 9 parts by mass of bisphenol A epoxy resin (manufactured by JER, Epikote 1004), 5 parts by mass of bisphenol A epoxy resin (manufactured by JER, Epikote YL980), 7 parts by mass of phenol aralkyl resin (manufactured by Mitsui Chemicals, Inc., Milex XLC-4L), and 0.45 parts by mass of tetraphenylphosphonium thiocyanate (thermosetting catalyst, manufactured by HOKKO CHEMICAL INDUSTRY CO., LTD., trade name; TPP-SCN) so that the soft magnetic particles were 45% by volume.

The magnetic composition was dissolved in methyl ethyl ketone, thereby producing a magnetic composition solution having a solid content concentration of 51 mass%.

The magnetic composition solution was applied on a separator (average thickness of 50 µm) composed of a polyethylene terephthalate film subjected to silicone release treatment, and thereafter, dried at 130°C for 2 minutes.

In this manner, the magnetic film 3 having a thickness of 200 µm was produced. The magnetic film 3 was in a semi-cured state (B-stage state).

Thereafter, the magnetic film 3 was attached to the lower side of the both-side conductive pattern board 2.

To be specific, the magnetic film 3 was overlapped with the both-side conductive pattern board 2 to be then heated at 175°C for 30 minutes, thereby curing the magnetic film 3 by heating (bringing it into a C-stage) to produce a magnetic circuit board 1 having a thickness of 100 µm.

### Examples 2 to 5

The magnetic films 3 were produced based on the formulation described in Table 1 in the same manner as that in Example 1 and subsequently, the magnetic circuit boards 1 were produced.

### (Evaluation)

Each of the following items is evaluated in Examples and the results are shown in Table 1.

### 1. Tensile storage elastic modulus E' (before and after curing)

The tensile storage elastic modulus E' of the magnetic film 3 in a B-stage state and that of the magnetic film 3 in a C-stage state were calculated by a dynamic viscoelasticity test based on the following conditions.

Dynamic Mechanical Analyzer (DMA): RSA III, manufactured by Rheometric Scientific, Inc.
Frequency: 1 Hz
Temperature increase rate: 10°C/min

### 2. Magnetic properties

The magnetic permeability of the magnetic film 3 was measured by a one turn method using an impedance analyzer.

Those with a magnetic permeability µ' of 100 or more at a frequency of 1 MHz were evaluated as Good.

### 3. Film-forming properties

Coating stability when the magnetic composition solution was applied on the separator and the surface of the produced magnetic film 3 were observed. Examples were evaluated in accordance with the following criteria.

Excellent: the magnetic composition solution was capable of being stably applied on the separator, and no roughness was generated on the surface of the produced magnetic film 3.

Good: the magnetic composition solution was capable of being stably applied, but roughness was confirmed on the surface of the magnetic film 3.

### 4. Reflow resistance

A reflowing process was performed by allowing the magnetic circuit board 1 to pass through an IR reflow oven with its temperature set so that it kept a temperature of 260°C or more for 10 seconds.

The interface between the magnetic film 3 and the both-side conductive pattern board 2 of the reflow treated magnetic circuit board 1 was observed. Examples were evaluated in accordance with the following criteria.

Good: occurrence of separation or unevenness was not confirmed.

### 5. Embedment properties

The magnetic circuit board 1 was cut in the thickness direction, and observed by SEM with a magnification of 500x. Examples were evaluated in accordance with the following criteria.

Excellent: the magnetic composition was embedded in the gap L between the wires 6.

Good: the magnetic composition was mostly embedded in the gap L between the wires 6.

[Table 1]

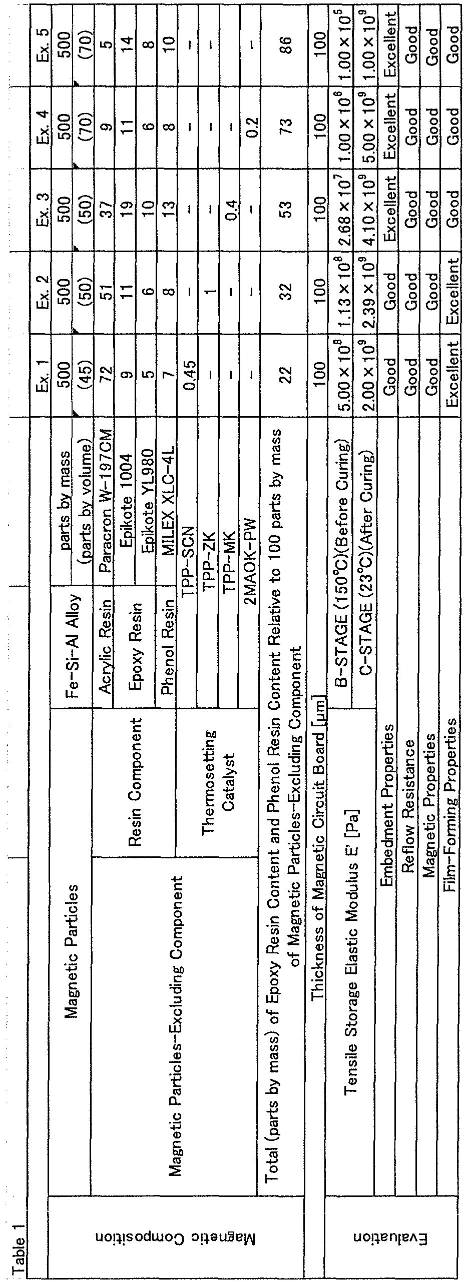

The numeral values for the components in Table represent parts by mass unless otherwise noted.

Details of the components shown in Table are shown below.
- Fe-Si-Al alloy: soft magnetic particles, trade name "SP-7", average particle size of 65 µm, flat, manufactured by Mate Co., Ltd.
- Paracron W-197CM: trade name, acrylate ester polymer mainly composed of ethyl acrylate-methyl methacrylate, manufactured by Negami Chemical Industirial Co., Ltd.
- Epikote 1004: trade name, bisphenol A epoxy resin, epoxy equivalent of 875 to 975 g/eq, manufactured by JER
- Epikote YL980: trade name, bisphenol A epoxy resin, epoxy equivalent of 180 to 190 g/eq, manufactured by JER
- MILEX XLC-4L: trade name, phenolaralkyl resin, hydroxyl equivalent of 170 g/eq, manufactured by Mitsui Chemicals
- TPP-SCN: trade name, tetraphenylphosphonium thiocyanate, manufactured by HOKKO CHEMICAL INDUSTRY CO., LTD.
- TPP-ZK: trade name, benzyltriphenylphosphonium tetraphenylborate, manufactured by HOKKO CHEMICAL INDUSTRY CO., LTD.
- TPP-MK: trade name, tetraphenylphosphonium tetra-p-triborate, manufactured by HOKKO CHEMICAL INDUSTRY CO., LTD.
- 2MAOK-PW: trade name, 2,4-diamino-6-[2'-methylimidazolyl-(1')]-ethyl-s-triazine isocyanuric acid adduct, manufactured by Shikoku Chemicals Corporation.

While the illustrative embodiments of the present invention are provided in the above description, such is for illustrative purpose only and it is not to be construed as limiting in any manner. Modification and variation of the present invention that will be obvious to those skilled in the art is to be covered by the following claims.

### Industrial Applicability

The magnetic circuit board and the position detection device of the present invention can be applied in various industrial products. For example, the magnetic circuit board of the present invention can be used for a position detection device, and the position detection device of the present invention can be used for input devices for computers such as digitizers.

## Claims

1. A magnetic circuit board comprising:
a circuit board portion and
a magnetic layer directly laminated on one side of the circuit board portion and formed from a magnetic composition containing magnetic particles and resin.

2. The magnetic circuit board according to claim 1, wherein
the circuit board portion is a both-side conductive pattern board having a resin board and conductive patterns laminated on both sides of the resin board, and
the magnetic layer is directly laminated on one side of the both-side conductive pattern board so as to directly cover the one conductive pattern.

3. The magnetic circuit board according to claim 2, wherein
the conductive pattern includes a plurality of wires disposed with spaced gaps to each other and
a part of the magnetic layer is embedded in the gap.

4. The magnetic circuit board according to claim 1, wherein
the circuit board portion has
a both-side conductive pattern board including a resin board and conductive patterns laminated on both sides of the resin board and
a resin layer laminated on the both-side conductive pattern board, and
the magnetic layer is directly laminated on the resin layer.

5. The magnetic circuit board according to claim 1, wherein
the magnetic layer is in a semi-cured state.

6. The magnetic circuit board according to claim 1, wherein
the magnetic layer has a tensile storage elastic modulus E' at 150°C of 1.0 × 10⁹ Pa or less.

7. The magnetic circuit board according to claim 1, wherein
a metal layer is further laminated on a face opposite to the face having the both-side conductive pattern board laminated thereon in the magnetic layer.

8. A position detection device comprising the magnetic circuit board according to claim 1.

9. A method for producing a magnetic circuit board comprising a step of:
attaching a magnetic layer in a semi-cured state formed from a magnetic composition containing magnetic particles and resin to one side of a circuit board portion.

10. The method for producing a magnetic circuit board according to claim 9, wherein
the magnetic layer has a tensile storage elastic modulus E' at 150°C of 1.0 × 10⁹ Pa or less.

11. The method for producing a magnetic circuit board according to claim 9 further comprising:
a curing step of completely curing the magnetic layer in a semi-cured state after the step of attaching the magnetic layer to the circuit board portion.

12. The method for producing a magnetic circuit board according to claim 11, wherein
the magnetic layer completely cured in the curing step has a tensile storage elastic modulus E' at 23°C of above 1.0 × 10⁹ Pa.

13. The method for producing a magnetic circuit board according to claim 11, wherein
the circuit board portion includes a resin board and conductive patterns laminated on both sides of the resin board;
the conductive pattern includes a plurality of wires disposed with spaced gaps to each other; and
in the step of attaching the magnetic layer to the circuit board portion, a part of the magnetic layer is embedded in the gap.
